# EUROPÄISCHE PATENTSCHRIFT

(11) **EP 2 519 960 B1**
(45) Veröffentlichungstag und Bekanntmachung des Hinweises auf die Patenterteilung: **10.12.2014**
(21) Anmeldenummer: 11706743.9
(22) Anmeldetag: 11.02.2011
(51) Int. Cl.: H01H 47/00

(54) **VORRICHTUNG ZUR ELEKTRISCHEN STROMKREISÜBERWACHUNG, SCHALTUNGSANORDNUNG ZUR VERSORGUNG EINES VERBRAUCHERS UND VERFAHREN ZUM BETREIBEN EINER SCHALTUNGSANORDNUNG**
DEVICE FOR ELECTRIC CIRCUIT MONITORING, CIRCUIT ARRANGEMENT FOR SUPPLYING A LOAD AND METHOD FOR OPERATING A CIRCUIT ARRANGEMENT
DISPOSITIF DE CONTRÔLE DE CIRCUIT ÉLECTRIQUE, DISPOSITIF DE COMMUTATION POUR L'ALIMENTATION D'UN RÉCEPTEUR ET PROCÉDÉ DE FONCTIONNEMENT D'UN DISPOSITIF DE COMMUTATION

(30) Priorität: 12.02.2010 DE 102010007784
(43) Veröffentlichungstag der Anmeldung: 07.11.2012
(73) Patentinhaber: Festo AG & Co. KG, 73734 Esslingen (DE)
(72) Erfinder: GEHRKE, Martin, 71384 Weinstadt (DE); ROBEL, Wolfgang, 70794 Filderstadt (DE)
(74) Vertreter: Kocher, Mark Werner
(86) Internationale Anmeldenummer: PCT/EP2011/000641
(87) Internationale Veröffentlichungsnummer: WO 2011/098282

(56) Entgegenhaltungen:
- EP-A1- 1 256 480
- EP-A2- 1 306 955
- US-A- 5 539 602

## Beschreibung

Die Erfindung betrifft eine Vorrichtung zur elektrischen Stromkreisüberwachung eines wenigstens einen elektrischen Verbraucher enthaltenden Verbraucherstromkreises, wobei zwei Versorgungsspannungsanschlüsse über je einen Schalter aufweisende Strompfade mit zwei Verbraucheranschlüssen verbunden sind. Ferner betrifft die Erfindung eine Schaltungsanordnung zur Versorgung eines Verbrauchers und ein Verfahren zum Betreiben einer Schaltungsanordnung.

Aus der DE 102008018244 B3 ist eine Vorrichtung zum Erkennen eines Fehlers in einer Leistungsbrückenschaltung mit einer Last, einem High-Side-Zweig, in dem ein High-Side-Leistungsschalter zwischen einem High-Side-Anschluss der Last und einem Versorgungsanschluss für ein High-Potential einer Versorgungsspannung angeordnet ist, und einem Low-Side-Zweig, in dem ein Low-Side-Leistungsschalter zwischen einem Low-Side-Anschluss der Last und einem Versorgungsanschluss für ein Low-Potential der Versorgungsspannung angeordnet ist, vorgesehen, wobei eine erste geschaltete Stromquelle, die mit der Last und einem Diagnoseanschluss für ein High-Potential einer Diagnosespannung verbunden ist und eine zweite geschaltete Stromquelle, die mit der Last und einem Diagnoseanschluss für ein Low-Potential der Diagnosespannung verbunden ist, sowie eine Steuereinrichtung zum Ansteuern der ersten geschalteten Stromquelle und der zweiten geschalteten Stromquelle, vorgesehen sind und wobei die Steuereinrichtung so ausgestaltet ist, dass sie bei geöffnetem High-Side-Leistungsschalter und geöffnetem Low-Side-Leistungsschalter eine der geschalteten Stromquellen einschaltet, während die andere der geschalteten Stromquellen ausgeschaltet ist, um anschließend die eine der geschalteten Stromquellen auszuschalten und die andere der geschalteten Stromquellen einzuschalten und eine Überprüfungseinrichtung zum Überprüfen einer Spannung an der Last zu aktivieren, wenn die eine der geschalteten Stromquellen eingeschaltet und die andere der geschalteten Stromquellen ausgeschaltet ist, sowie wenn die eine der geschalteten Stromquellen ausgeschaltet und die andere der geschalteten Stromquellen eingeschaltet ist.

Eine weitere bekannte Vorrichtung dient beispielsweise als Sicherheitsabschaltsystem, um insbesondere energiereiche Anlagekomponenten zu deaktivieren, wenn eine Fehlersituation oder eine Fehlfunktion erkannt wird, wie z.B. ein einen Fehlerstrom verursachender Querschluss. In einem solchen Fall wird insbesondere der elektrische Strom bzw. die Versorgungsspannung abgeschaltet und/oder eine Fehlermeldung und/oder eine Fehleranzeige generiert. Die Abtrennung des Verbrauchers kann ein- oder zweikanalig erfolgen.

Ein derartiges Sicherheitsabschaltsystem ist beispielsweise aus der WO 02/095282 A1 bekannt. Um sicherzustellen, dass die Halbleiterschaltelemente im Gefahrenfall auch wirklich in der Lage sind, den Sicherheitsstromkreis zu öffnen, werden diese in bekannter Weise wiederholt kurzzeitig geöffnet, und die Auswirkung auf eine Detektionsschaltung überwacht. Dies wird durch Beobachtung der Spannung an der geschalteten Seite realisiert. Das Wiedereinschalten des Verbrauchers erfolgt adaptiv nach eindeutiger Detektion des Abschaltimpulses. Dies bringt jedoch den Nachteil mit sich, dass dieser so lang werden kann, dass die Reaktion der Abschaltung für die Last relevant und damit gegebenenfalls auch funktionsschädlich sein kann. In bekannter Weise wird daher auch ein zweiter, paralleler Schaltpfad realisiert, der zur Zeit des Prüfimpulses die unterbrochene Versorgung der Last übernimmt. Dies bedeutet jedoch einen erhöhten Aufwand.

Befindet sich zwischen dem betrachteten Signal und einem anderen Potential eine Kapazität, dann speist diese die Last während des geöffneten Schalters und es findet keine hinreichende Spannungsänderung im Betrachtungszeitraum statt. Selbst wenn kein Schluss zu einem Fremdpotential besteht, dann werden kurze Ausschaltimpulse zu einer fehlerhaften Diagnose eines unerwünschten Schlusses führen. Lange Ausschaltimpulse werden eventuell vorhandene Kapazitäten zwar umladen, so, dass sich eine hinreichend große Spannungsänderung ergibt, dies ist jedoch dann auch für die Last relevant und kann zu Funktionsstörungen führen.

Das Dokument EP-A-1306955 offenbart eine Vorrichtung, eine Schaltungsanordnung und ein Verfahren gemäß dem Oberbegriff der Ansprüche 1, 6 und 15.

Ein anderes bekanntes Verfahren, auf die Ausgangsspannung ein phaseninverses Kleinsignal aufzumodulieren und dessen Amplitude und Phase zu beobachten, umgeht zwar das Problem der temporär ausgeschalteten Last und damit die Einflüsse von hinreichenden Spannungsänderungen auf die Funktion der Last, leidet jedoch unter der Bedämpfung des Kleinsignals durch Kapazitäten der Last selber.

Ein einen Fehlerstrom verursachender Querschluss liegt beispielsweise dann vor, wenn die positive Zuleitung zur Last einen Kurzschluss zur eigenen Quelle vor dem sicheren Schalter oder zu einer anderen, Potentialbezogenen positiven Quelle aufweist, bzw. wenn die negative Zuleitung zur Last einen Kurzschluss auf das Bezugspotential der eigenen Quelle vor dem sicheren Schalter aufweist. Dies ist insbesondere bei Systemen zu beachten, deren Bezugspotential eine Verbindung zum Erdpotential (FE oder PE) aufweist (sogenannte PELV-Systeme). Solche Schlüsse können durch aufgescheuerte Leitungen oder Bauteilefehler in der geschalteten Last, sowie durch kontaktierende Kleinteile oder erhebliche Verschmutzungen hervorgerufen werden.

Im eingeschalteten Betrieb ist ein solcher Querschluss zu einem Fremdpotential ohne gesonderte Maßnahmen nicht erkennbar, da der Schaltzustand sowohl durch die gesichert abschaltbare Quelle, als auch durch das kontaktierende Fremdpotential bedingt sein könnte.

Gemäß dem vorstehend geschilderten Stand der Technik können diese Probleme nur unzureichend gelöst werden bzw. man muss mit so langen Abschaltintervallen arbeiten, dass die Funktionalität der Last beeinträchtigt werden kann bzw. beeinträchtigt wird.

Eine Aufgabe der vorliegenden Erfindung besteht darin, eine Vorrichtung zur elektrischen Stromkreisüberwachung sowie eine Schaltungsanordnung zur Versorgung eines Verbrauchers und ein Verfahren zum Betreiben einer Schaltungsanordnung bereitzustellen, durch die unzulässige Querströme in der Vorrichtung bzw. der Schaltungsanordnung erkannt werden können.

Diese Aufgabe wird gemäß einem ersten Aspekt durch eine Vorrichtung mit den Merkmalen des Anspruchs 1 gelöst.

In vorteilhafter Weise vermeidet die erfindungsgemäße Vorrichtung die geschilderten Nachteile des Standes der Technik dadurch, dass dafür gesorgt wird, dass die Potentiale des Lastkreises kurzzeitig symmetrisch gegenüber den sie umgebenden Potentialen angehoben oder abgesenkt werden. Befindet sich ein elektrischer Querschluss zwischen einer der beiden Leitungen des Lastkreises und einem zunächst gleichen oder ähnlichen Potential der Umgebung, dann führt die Potentialanhebung oder -absenkung zu einem Stromfluss durch den Querschluss. Dieser Stromfluss kann dann in einfacher Weise detektiert werden. Befindet sich parallel zu einem möglichen unerwünschten Querschluss eine Kapazität, dann führt die Potentialveränderung ebenfalls zu einem temporären Stromfluss durch Umladung, so dass auch für diesen Fall die erfindungsgemäße Vorrichtung eine vorteilhafte Lösung bildet. Um dies nicht in das Messergebnis einfließen zu lassen, kann die Potentialveränderung sehr niederohmig durchgeführt werden, so dass mögliche Kapazitäten gegen Erdpotential am Ende des Prüfintervalls umgeladen sind und - sofern ein Querschluss vorliegt - ausschließlich statische Ströme vorkommen. Durch die erfindungsgemäße Vorrichtung können im Vergleich zum Stand der Technik insbesondere wesentlich kürzere Prüfintervalle bzw. Prüfimpulse realisiert werden und/oder erreicht werden, dass die angeschlossene Last keine Änderung der Versorgungsspannung erfährt, was dazu führt, dass die angeschlossene Last bzw. die angeschlossenen Verbraucher in ihrer Funktion nicht beeinträchtigt werden.

Durch die in den Unteransprüchen aufgeführten Maßnahmen sind vorteilhafte Weiterbildungen und Verbesserungen der im Anspruch 1 angegebenen Vorrichtung möglich.

Die Steuermittel und/oder die Signalmittel weisen zweckmäßigerweise wenigstens einen Mikrocontroller auf oder sind als ein solcher ausgebildet. Dies ermöglicht eine kompakte Bauweise, insbesondere wenn die Vorrichtung in vorteilhafter Weise als zwischen die Versorgungsspannung und die wenigstens einen Verbraucher geschaltetes elektrisches Gerät ausgebildet ist.

Zur Erfassung des Stromflusses im Stromkreis des weiteren Schalters sind zweckmäßigerweise Stromerfassungsmittel vorgesehen, die mit einer Auswerteeinrichtung verbunden sind. Diese Stromerfassungsmittel besitzen in vorteilhafter Weise einen Strommesswiderstand im Stromkreis des weiteren Schalters, insbesondere einen sehr niederohmigen Strommesswiderstand. Der Spannungsabfall über diesem Strommesswiderstand kann in einfacher Weise über einen Messverstärker erfasst werden.

Die Auswerteeinrichtung ist in vorteilhafter Weise mit den Steuermitteln und/oder den Signalmitteln verbunden oder in diesen integriert. Besonders vorteilhaft ist dabei die Ausbildung sowohl der Steuermittel, wie auch der Signalmittel und der Auswerteeinrichtung in einem Mikrocontroller.

Funktionsstörungen der angeschlossenen Verbraucher während der Prüfintervalle können noch wirksamer dadurch verhindert werden, dass die beiden Verbraucheranschlüsse über einen Kondensator miteinander verbunden sind, der während der Abtrennung der Spannungsversorgung als Puffer dient. Ergänzend oder alternativ zu einem Kondensator kann auch ein anders gearteter elektrischer Energiespeicher zwischen den beiden Verbraucheranschlüssen angeordnet werden, beispielsweise ein Akkumulator oder eine Batterie.

Die Prüfintervalle können in vorteilhafter Weise eine den Betrieb des Verbrauchers nicht oder nur unwesentlich beeinträchtigende kurze Zeitdauer aufweisen.

Zur externen Steuerung der Vorrichtung oder zur Übermittlung von zusätzlichen Steuerfunktionen sind die Steuer- und/oder Signalmittel in vorteilhafter Weise mit einer externen Überwachungs- oder Steuereinrichtung über ein Bussystem oder drahtlos verbunden. Dies ermöglicht auch Rückmeldungen, wie Diagnosemitteilungen oder Fehlermeldungen, wobei auch Umprogrammierungen oder Veränderungen der Parameter des Mikrocontrollers in der Vorrichtung realisierbar sind.

Die Steuereinrichtung besitzt auch zweckmäßigerweise Abschaltmittel zur Abschaltung der beiden Schalter in den Strompfaden bei einer Fehlererkennung oder Grenzwertüberschreitung, so dass die Vorrichtung insbesondere auch in sicherheitskritischen Anwendungen eingesetzt werden kann, beispielsweise auch in Verbindung mit bei pneumatischen Antrieben.

Die Aufgabe der Erfindung wird gemäß einem zweiten Aspekt mit den Merkmalen des Anspruchs 6 gelöst. Hierbei weist eine Schaltungsanordnung zur Versorgung eines Verbrauchers mit elektrischer Energie wenigstens zwei Strompfade auf, die sich jeweils zwischen einem zugeordneten Versorgungsanschluss zur Einspeisung von elektrischer Energie in die Schaltungsanordnung und einem Verbraucheranschluss zur Bereitstellung elektrischer Energie an einen Verbraucher erstrecken, wobei den Strompfaden eine Diagnoseeinrichtung zugeordnet ist, die für die Ermittlung und Verarbeitung wenigstens eines elektrischen Kennwerts ausgebildet sind, um Fehlfunktionen der Schaltungsanordnung zu ermitteln. Erfindungsgemäß ist vorgesehen, dass die Diagnoseeinrichtung Einstellmittel umfasst, die für eine variable Einstellung von Potentialniveaus an den zugeordneten Verbraucheranschlüssen und für eine Bereitstellung einer vorgebbaren Potentialdifferenz zwischen den Verbraucheranschlüssen ausgebildet sind. Mit Hilfe der Einstellmittel kann somit eine, vorzugsweise synchrone, Verschiebung der an den Verbraucheranschlüssen bereitgestellten elektrischen Potentiale vorgenommen werden. Somit liegen an den Verbraucheranschlüssen zwar zeitlich variable elektrische Potentiale an, diese können jedoch derart eingestellt werden, dass dem Verbraucher zu jedem Zeitpunkt eine bedarfsgerechte, vorgebbare Potentialdifferenz oder elektrische Spannung bereitgestellt wird. Somit kann mit Hilfe der Diagnoseeinrichtung ein mittelbarer Einfluss auf die in der Schaltungsanordnung vorherrschenden elektrischen Charakteristika, insbesondere des elektrischen Stroms und/oder der elektrischen Spannung, genommen werden. Durch Beobachtung des von der Diagnoseeinrichtung ermittelten Kennwerts in Abhängigkeit der veränderten elektrischen Charakteristika kann ein Rückschluss auf die korrekte Funktion oder eine möglichen Fehlfunktion der Schaltungsanordnung gezogen werden. Besonders vorteilhaft ist es, dass mit Hilfe der Schaltungsanordnung auch die elektrischen Anschlussmittel für den Verbraucher mit überprüft werden können. Bei den Anschlussmitteln kann es sich beispielsweise um elektrische Kabel handeln, die einem mechanischen Verschleiß unterworfen sind und möglicherweise zu unerwünschten Querschlüssen führen, die von der Schaltungsanordnung erkannt werden können. Insbesondere umfasst die Schaltungsanordnung auch die Anschlussmittel zum Verbraucher und gegebenenfalls auch den Verbrauch als solchen. Fehler innerhalb der Schaltungsanordnung, beispielsweise Kriechströme zwischen elektrischen und/oder elektronischen Komponenten der Schaltungsanordnung können ebenfalls mit Hilfe der Diagnoseeinrichtung erkannt werden.

Zweckmäßig ist es, wenn die Einstellmittel für eine alternative Einstellung von zwei, insbesondere genau zwei, unterschiedlichen Potentialniveaus an dem jeweils zugeordneten Verbraucheranschluss ausgebildet sind. Wenn nur eine Umschaltung zwischen einem ersten Potentialniveau und einem zweiten Potentialniveau ausreichend ist, um die gewünschte Diagnose der Schaltungsanordnung durchzuführen, kann der elektrische Aufbau der Diagnoseeinrichtung einfach und kostengünstig gehalten werden. Besonders bevorzugt sind daher die Einstellmittel für eine Einstellung von genau zwei unterschiedlichen Potentialniveaus an dem Verbraucheranschluss ausgebildet.

Bei einer Weiterbildung der Erfindung ist vorgesehen, dass die Einstellmittel derart ausgebildet sind, dass an den Verbraucheranschlüssen eine Bereitstellung einer von den variablen Potentialniveaus unabhängigen, insbesondere konstanten, Potentialdifferenz zwischen den Verbraucheranschlüssen erfolgt. Somit wird der Verbraucher unabhängig von dem Betriebszustand der Schaltungsanordnung und den dabei vorherrschenden elektrischen Charakteristika in der Schaltungsanordnung stets, vorzugsweise zu jedem Zeitpunkt seines Betriebs, mit einem vorgebbaren, insbesondere konstanten, elektrischen Energiefluss beaufschlagt. Die Funktion des Verbrauchers ist damit vorzugsweise unbeeinflusst von den in der Schaltungsanordnung vorzunehmenden Prüfintervallen.

Bevorzugt ist die Diagnoseeinrichtung derart ausgebildet, dass während eines Prüfintervalls, in dem eine Überprüfung der Schaltungseinrichtung vorgenommen wird, eine unterbrechungsfreie und/oder spannungskonstante Versorgung des Verbrauchers mit elektrischer Energie gewährleistet ist. Wenn die Schaltungsanordnung beispielsweise für die Versorgung einer elektrischen oder elektronischen Baugruppe genutzt wird, die eine geringe elektrische Trägheit und/oder eine hohe Empfindlichkeit gegenüber Schwankungen in der elektrischen Versorgung aufweist, ist es vorteilhaft, wenn die von der Schaltungsanordnung bereitgestellte elektrische Energie unterbrechungsfrei und/oder mit konstanter elektrischer Spannung bereitgestellt wird. Beispielsweise kann es sich bei dem Verbraucher um ein fluidelektrisches Schnellschaltventil handeln, das mit Schaltfrequenzen im Bereich von 1000 Hertz oder mehr betrieben werden kann, so dass bereits ein Einbrechen der elektrischen Versorgung für einen derartigen Verbraucher in einem Bereich von weniger als 1 Millisekunde einen ungewünschten Schaltvorgang auslösen kann.

In weiterer Ausgestaltung der Erfindung ist vorgesehen, dass in wenigstens einem Strompfad, der sich zwischen einem Versorgungsanschluss und einem Verbraucheranschluss erstreckt, als Einstellmittel ein von der Diagnoseeinrichtung schaltbares Spannungsstufenglied eingeschleift ist, das für eine definierte Potentialverschiebung an den Verbraucheranschlüssen bei einem vorgebbaren Betriebszustand der Schaltungsanordnung ausgebildet ist. Das Spannungsstufenglied dient zur Einstellung, insbesondere Umschaltung, des elektrischen Potentials in dem jeweiligen Strompfad zwischen einem ersten und wenigstens einem zweiten Potentialniveau. Beispielsweise kann das Spannungsstufenglied zwei parallel angeordnete, mittels einer entsprechenden Schalteinrichtung wahlweise in den Strompfad einschaltbare elektrische oder elektronische Bauelemente umfassen. Diese Bauelemente unterscheiden sich beispielsweise im Hinblick auf ihren Widerstand und/oder einen im Bauelement auftretenden Spannungsabfall und/oder eine andere elektrische Charakteristik und gewährleisten somit bei der Umschaltung, insbesondere bei ansonsten unveränderten Betriebsbedingungen in der Schaltungsanordnung, zwei unterschiedliche Potentialniveaus an dem zugeordneten Verbraucheranschluss. Alternativ kann vorgesehen sein, dass ein elektrisches oder elektronisches Bauelement, welches die gewünschte Potentialänderung gewährleistet, im Strompfad angeordnet ist und mittels eines schaltbaren Strompfadabschnitts zeitweise überbrückt werden kann.

Vorteilhaft ist es, wenn das Spannungsstufenglied als Parallelschaltung einer Diode und eines von der Diagnoseeinrichtung ansteuerbaren Schaltmittels ausgebildet ist. Damit kann eine besonders präzise Veränderung des Potentialniveaus am Verbraucheranschluss erreicht werden. Die Diode ist permanent in den Strompfad eingeschleift und liefert zumindest innerhalb eines breiten Intervalls für den im Strompfad fließenden Strom einen stromunabhängigen Spannungsabfall. Dieser Spannungsabfall reduziert das am Versorgungsanschluss angelegte und an den Verbraucheranschluss zur Verfügung zu stellende elektrische Potential um einen präzise vorgebbaren Wert. Somit wird in einem ersten Betriebsfall, in dem die Diode nicht vom Schaltmittel überbrückt wird, am zugeordneten Verbraucheranschluss ein um den Spannungsabfall in der Diode, insbesondere um die Zenerspannung, reduziertes elektrisches Potential zur Verfügung gestellt. Demgegenüber wird in einem zweiten Betriebsfall, in dem die Diode vom Schaltmittel überbrückt ist, ein unverändertes elektrisches Potential am zugeordneten Verbraucheranschluss bereitgestellt. Sofern wenigstens zwei der Strompfade mit derartigen Spannungsstufengliedern ausgerüstet sind, kann die gewünschte Potentialverschiebung bei gegensynchroner Betätigung der jeweiligen Schaltmittel erreicht werden, so dass stets ein Strompfad mit eingeschleifter Diode und der andere Strompfad mit überbrückter Diode betrieben wird. Bei vorzugsweise gleichartiger Ausgestaltung der in die Strompfade eingeschleiften Spannungsstufenglieder kann die gewünschte Potentialverschiebung bei Aufrechterhaltung der Potentialdifferenz gewährleistet werden.

Hierzu ist es zweckmäßig, wenn die Diagnoseeinrichtung für die Durchführung eines Prüfintervalls für eine wechselweise Aktivierung der Schaltmittel in den mit Spannungsstufenglied ausgerüsteten Strompfaden ausgebildet ist, um an den Verbraucheranschlüssen vorgebbare Potentialniveaus bei konstanter Potentialdifferenz zwischen den Verbraucheranschlüssen bereitzustellen. Die wechselweise Umschaltung für die jeweiligen Spannungsstufenglieder kann derart vorgesehen werden, dass die zugeordneten Schaltmittel synchron oder zeitgleich angesteuert werden. Bei einer Weiterbildung der Erfindung kann vorgesehen werden, dass jeweils dasjenige Schaltmittel zuerst angesteuert wird, das demjenigen Strompfad zugeordnet ist, in dem die Potentialabsenkung wirksam ist, um hierdurch unter Inkaufnahme einer kurzzeitigen Vergrößerung der Potentialdifferenz zu gewährleisten, dass es an den Verbraucheranschlüssen nicht zu einer Absenkung der Potentialdifferenz, beispielsweise aufgrund von unterschiedlichen Reaktionszeiten der Schaltmittel, kommt.

Vorzugsweise ist vorgesehen, dass die Diagnoseeinrichtung für eine Differenzbildung zwischen sich bei wechselweiser Aktivierung der Schaltmittel einstellenden elektrischen Kennwerten ausgebildet ist, um eine Beurteilung eines Funktionszustands der Schaltungsanordnung zu ermöglichen. Die Diagnose der Schaltungsanordnung beruht auf der Überlegung, dass sich die in der Schaltungsanordnung vorherrschenden elektrischen Charakteristika bei der Veränderung des Potentialniveaus an den Verbraucheranschlüssen bei konstanter Potentialdifferenz insbesondere dann ändern, wenn in der Schaltungsanordnung selbst Verluste auftreten, die beispielsweise auf parasitäre Kapazitäten zurückzuführen sind. Sofern diese Verluste einen vorgebbaren Schwellenwert übersteigen, muss von einer Fehlfunktion der Schaltungsanordnung ausgegangen werden, diese Fehlfunktion kann durch die Diagnoseeinrichtung feststellt werden und zur Auslösung eines Alarmsignal führen, das beispielsweise eine gezielte Abschaltung des an die Schaltungsanordnung angeschlossenen Verbrauchers bewirkt.

Bei einer anderen Ausführungsform der Erfindung ist vorgesehen, dass in zwei Strompfaden jeweils ein Schalter angeordnet ist, dass eine zusätzliche Spannungsquelle vorgesehen ist, deren Potential mittels eines weiteren Schalters an einem der Verbraucheranschlüsse anlegbar ist, dass die Diagnoseeinrichtung zum Öffnen der beiden Schalter in den Strompfaden und Schließen des weiteren Schalters während Prüfintervallen ausgebildet ist und dass die Diagnoseeinrichtung Signalmittel zur Erzeugung von Fehlersignalen bei Erkennung eines oberhalb eines vorgegebenen oder vorgebbaren Stromflusses liegenden Stroms durch den weiteren Schalter umfasst. Durch das Öffnen der beiden Schalter in den Strompfaden und das Schließen des weiteren Schalters wird mittels der zusätzlichen Spannungsquelle dafür gesorgt, dass die elektrischen Potentiale an den Verbraucheranschlüssen und damit des Lastkreises kurzzeitig symmetrisch gegenüber den sie umgebenden Potentialen angehoben oder abgesenkt werden. Befindet sich ein elektrischer Querschluss zwischen einer der beiden Leitungen des Lastkreises und einem zunächst gleichen oder ähnlichen Potential der Umgebung, dann führt die Potentialanhebung oder -absenkung zu einem Stromfluss durch den Querschluss. Dieser Stromfluss kann dann in einfacher Weise detektiert werden. Befindet sich parallel zu einem möglichen unerwünschten Querschluss eine Kapazität, dann führt die Potentialveränderung ebenfalls zu einem temporären Stromfluss durch Umladung, so dass auch für diesen Fall die erfindungsgemäße Vorrichtung eine vorteilhafte Lösung bildet. Um dies nicht in das Messergebnis einfließen zu lassen, kann die Potentialveränderung sehr niederohmig durchgeführt werden, so dass mögliche Kapazitäten gegen Erdpotential am Ende des Prüfintervalls umgeladen sind und - sofern ein Querschluss vorliegt - ausschließlich statische Ströme vorkommen. Durch die erfindungsgemäße Vorrichtung können im Vergleich zum Stand der Technik insbesondere wesentlich kürzere Prüfintervalle bzw. Prüfimpulse realisiert werden und/oder erreicht werden, dass die angeschlossene Last keine Änderung der Versorgungsspannung erfährt, was dazu führt, dass die angeschlossene Last bzw. die angeschlossenen Verbraucher in ihrer Funktion nicht beeinträchtigt werden.

Bei einer Weiterbildung dieser Ausführungsform ist vorgesehen, dass Stromerfassungsmittel im Stromkreis des weiteren Schalters angeordnet sind, die mit der Diagnoseeinrichtung verbunden sind. Die Stromerfassungsmittel dienen zur Erfassung von Querströmen, die bei einer fehlerbehafteten Schaltungsanordnung aufgrund der erfindungsgemäßen Verschiebung des Potentialniveaus bei konstanter Potentialdifferenz an den Verbraucheranschlüssen auftreten können.

In weiterer Ausgestaltung dieser Ausführungsform der Erfindung weisen die Stromerfassungsmittel einen Strommesswiderstand im Stromkreis des weiteren Schalters auf.

Bevorzugt sind bei dieser Ausführungsform die beiden Verbraucheranschlüsse über einen Kondensator miteinander verbunden. Der Kondensator puffert die Versorgungsspannung für den Verbraucher während des Prüfintervalls und wird abseits des Prüfintervalls mit der gleichen Potentialdifferenz wie der Verbraucher beaufschlagt und dadurch für das nächste Prüfintervall aufgeladen.

Bei einer Weiterbildung dieser Ausführungsform ist vorgesehen, dass die Diagnoseeinrichtung mit einer externen Überwachungs- oder Steuereinrichtung über ein Bussystem oder drahtlos verbunden ist.

Vorteilhaft ist es, wenn die Diagnoseeinrichtung Abschaltmittel zum Öffnen der beiden Strompfade bei einer Fehlererkennung oder Grenzwertüberschreitung umfasst. Dadurch kann der mit der Schaltungsanordnung verbundene Verbraucher zuverlässig in einen strom- und/oder spannungslosen Zustand gebracht werden, sofern in der Schaltungsanordnung eine Fehlfunktion im Hinblick auf Querströme detektiert wird.

Gemäß einem weiteren Aspekt der Erfindung wird die Aufgabe auch durch ein Verfahren zum Betreiben einer Schaltungsanordnung zur Versorgung eines Verbrauchers mit elektrischer Energie gelöst, wobei die Schaltungsanordnung eine Diagnoseeinrichtung zur Ermittlung eines Funktionszustands der Schaltungsanordnung umfasst, mit den Schritten: Bereitstellen einer vorgebbaren elektrischen Potentialdifferenz an Verbraucheranschlüssen der Schaltungsanordnung, die einem Verbraucher zugeordnet sind, Ermitteln eines ersten Betrags eines elektrischen Kennwerts der Schaltungsanordnung mittels der Diagnoseeinrichtung, synchrone Verschiebung der elektrischen Potentiale an den Verbraucheranschlüssen bei Aufrechterhaltung der Potentialdifferenz derart, dass eine unterbrechungsfreie und konstante Versorgung des Verbrauchers gewährleistet ist, Ermitteln eines zweiten Betrags des elektrischen Kennwerts der Schaltungsanordnung und Berechnen einer Differenz zwischen dem ersten und dem zweiten Betrag als Indikator für eine Fehlfunktion mittels der Diagnoseeinrichtung, Vergleichen der berechneten Differenz mit einem vorgebbaren Schwellwert, Bereitstellen einer Fehlermeldung bei Überschreiten des vorgebbaren Schwellwerts durch die errechnete Differenz. Bei einer ersten Ausführungsform der Erfindung, bei der eine schaltbare Spannungsquelle in der Schaltungsanordnung vorgesehen ist, um eventuelle Querschlüsse zu ermitteln, kann darauf verzichtet werden, den ersten Betrag des elektrischen Kennwerts zu ermitteln, da im ersten Betriebszustand dieser Schaltungsanordnung kein Stromfluss über die Stromerfassungseinrichtung stattfindet, so dass der Betrag des elektrischen Kennwerts Null beträgt. Sofern bei dieser Ausführungsform der Erfindung im ersten Betriebszustand eine Ermittlung des elektrischen Kennwerts stattfindet, kann dies dazu genutzt werden, die Funktion des der Spannungsquelle zugeordneten Schalters zu überprüfen. Bei einer zweiten Ausführungsform der Erfindung, bei der in beiden Strompfaden jeweils Spannungsstufenglieder angeordnet sind, erfolgt die Ermittlung der beiden elektrischen Kennwerte jeweils einem unbestimmten elektrischen Potentialniveau, wobei dies für die Genauigkeit des Messergebnisses ohne Belang ist, da allein die Differenz zwischen den beiden ermittelten Kennwerten entscheidend ist.

Vorteilhafte Ausführungsbeispiele der Erfindung sind in der Zeichnung dargestellt und in der nachfolgenden Beschreibung näher erläutert. Es zeigen:
- Figur 1: Ein Schaltbild eines ersten Ausführungsbeispiels der Erfindungen,
- Figur 2: ein leicht modifiziertes Schaltbild eines zweiten Ausführungsbeispiels der Erfindung und
- Figur 3: ein weiteres Schaltbild eines dritten Ausführungsbeispiels der Erfindung.

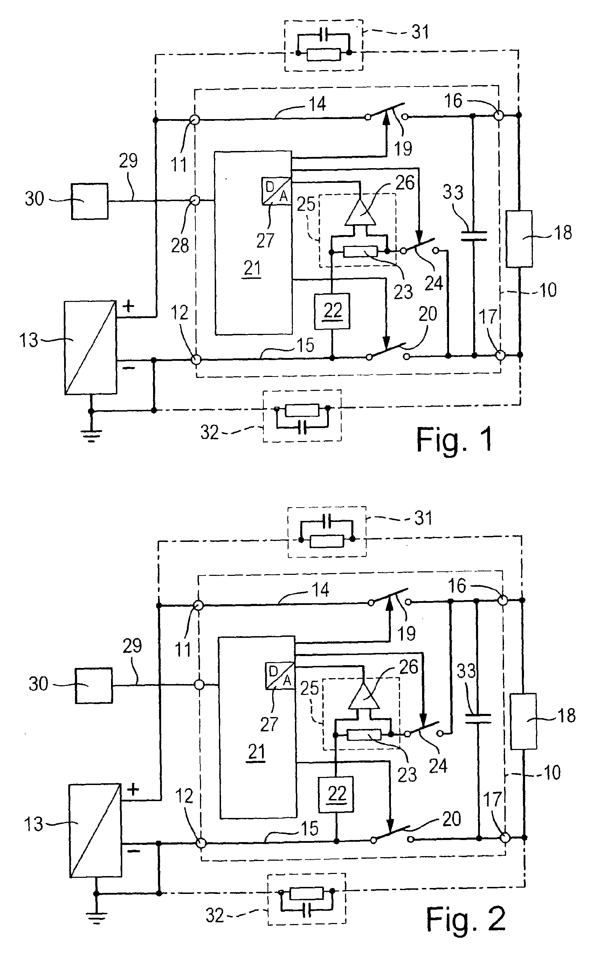

Bei dem in Figur 1 dargestellten ersten Ausführungsbeispiel wird eine Vorrichtung 10 zur elektrischen Stromkreisüberwachung bzw. zur Sicherheitsabschaltung bei fehlerhaften Querschlüssen über zwei Versorgungsspannungsanschlüsse 11, 12 mit einer Versorgungsspannung seitens einer Spannungsquelle 13 versorgt. Die Versorgungsspannungsanschlüsse 11, 12 sind über zwei Strompfade 14, 15 mit zwei Verbraucheranschlüssen 16, 17 verbunden, an denen Verbraucher anschließbar sind, im Ausführungsbeispiel ein Verbraucher 18. Zur Unterbrechung der Strompfade 14, 15 weisen diese jeweils einen elektrischen Schalter 19, 20 auf, wobei diese Schalter 19, 20 durch eine elektronische Steuereinrichtung 21 steuerbar sind. Bei dieser elektronischen Steuereinrichtung 21 kann es sich um einen Mikrocontroller handeln oder die Steuereinrichtung 21 enthält einen oder mehrere Mikrocontroller. Die elektrischen Schalter 19, 20 können als Halbleiterschalter oder als Relais ausgebildet sein.

Eine zusätzliche Spannungsquelle 22 bildet zusammen mit einem Strommesswiderstand 23 und einem weiteren elektrischen Schalter 24 eine Reihenschaltung, die den elektrischen Schalter 20 überbrückt, also zwischen den negativen Versorgungsspannungsanschluss 12 und den negativen Verbraucheranschluss 17 geschaltet ist. Der weitere elektrische Schalter 24 wird ebenfalls durch die elektronische Steuereinrichtung 21 gesteuert bzw. geschaltet und kann ebenfalls als Halbleiterschalter oder Relais ausgebildet sein. Ein zusammen mit dem Strommesswiderstand 23 eine Stromerfassungseinrichtung 25 bildender Messverstärker 26 ist ausgangsseitig mit einem Messeingang der elektronischen Steuereinrichtung 21 verbunden, der einen A/D-Wandler 27 aufweist. Dieser A/D-Wandler 27 kann selbstverständlich auch als separate Baueinheit ausgebildet sein.

Die elektronische Steuereinrichtung 21 kann über eine Busschnittstelle 28, an die ein Bussystem 29 angeschlossen ist, mit einer externen Überwachungs- oder Steuereinrichtung 30 kommunizieren, insbesondere Fehlermeldungen oder Statusmeldungen abgeben und/oder externe Steuersignale, Parametriersignale oder Programmiersignale empfangen. Eine solche Kommunikation kann prinzipiell auch drahtlos erfolgen, beispielsweise über Funk, Bluetooth oder optisch, magnetisch, induktiv oder dergleichen.

Die beiden Verbraucheranschlüsse 16, 17 sind über einen Kondensator 33 miteinander verbunden, der als Pufferkondensator dient.

Die als Ausführungsbeispiel beschriebene Vorrichtung dient dazu, mögliche fehlerhafte Schlüsse bzw. Querschlüsse 31, 32 zu detektieren, die den Schalter 19 und/oder den Schalter 20 überbrücken. Diese Querschlüsse 31, 32 sind symbolisch jeweils durch einen parallel zu einem Widerstand geschalteten Kondensator symbolisiert.

Zur Detektion erzeugt die elektronische Steuereinrichtung 21 in regelmäßigen oder unregelmäßigen Zeitabständen sehr kurze Prüfsignale, durch die während entsprechend kurzer Prüfintervalle die beiden Schalter 19, 20 geöffnet werden und der Schalter 24 geschlossen wird. Dadurch wird das Potential der zusätzlichen Spannungsquelle 22 über den Strommesswiderstand 23 an den Verbraucheranschluss 17 gelegt. Dadurch verändert sich das gesamte Potential des Verbrauchers 18 um den Betrag der Spannung der zusätzlichen Spannungsquelle 22. Besteht nun ein ohmscher Querschluss 32, der den Schalter 20 überbrückt oder ein ohmscher Querschluss 31, der den Schalter 19 überbrückt, führt dies zu einem statischen Strom über den Strommesswiderstand 23, der durch den Messverstärker 26 verstärkt über den A/D-Wandler 27 der Steuereinrichtung 21 mitgeteilt wird. Eventuell vorhandenen Kapazitäten, also Querschlusskapazitäten, führen im Schaltmoment ebenfalls zu Umladeströmen, die jedoch bei entsprechend niederohmiger Auslegung des Strommesswiderstands 23 und der Spannungsquelle 22 vor Ende des Prüfintervalls abgeklungen sind. Im vorliegenden Ausführungsbeispiel kann das Prüfintervall bzw. das Prüfsignal deutlich unter 100 Mikrosekunden betragen, was insbesondere bei entsprechender Auslegung des Kondensators 33 dazu führt, dass am Verbraucher 18 kein nennenswerter Spannungseinbruch auftritt. Auch ohne den Kondensator 33 ist eine entsprechende Auslegung möglich.

Der Stromfluss durch den Strommesswiderstand 23 wird während des Prüfintervalls einmal oder mehrmals gemessen und erscheint als digitales Signal über den A/D-Wandler 27 in der Steuereinrichtung 21. Diese trifft aufgrund des erfassten Stromwerts oder des erfassten Signalverhaltens die Entscheidung, ob ein Schluss bzw. Querschluss vorliegt. Ab einem maximal zulässigen Grenzwert wird dann ein fehlerhafter Querschluss detektiert, worauf die Steuereinrichtung 21 die beiden Schalter 19, 20 wieder öffnet, bis der Fehler behoben ist. Hierdurch wird der Verbraucher 18 sicher abgeschaltet. Zusätzlich kann ein entsprechendes Fehlersignal gespeichert und/oder über das Prüfsystem 29 der externen Überwachungs- oder Steuereinrichtung 30 mitgeteilt werden. Wird kein fehlerhafter Querschluss erkannt, so werden am Ende des Prüfintervalls die Schalter 19, 20 wieder geschlossen und der Schalter 24 wird geöffnet.

Die erfindungsgemäße Anhebung oder Absenkung des Potentials während des Prüfintervalls führt sicher zu einem Stromfluss durch den Strommesswiderstand 23, auch wenn der unerwünschte Querschluss zu einem gleichhohen Potential führt. Die Potentialanhebung erfolgt über einen einzigen Pfad, dessen Stromfluss während des kurzen Prüfintervalls beobachtet wird.

Das in Figur 2 dargestellte zweite Ausführungsbeispiel entspricht im Aufbau und in der Funktion weitgehend dem ersten Ausführungsbeispiel, so dass gleiche oder gleichwirkende Bauteile oder Baugruppen mit denselben Bezugszeichen versehen und nicht nochmals beschrieben sind. Der einzige Unterschied zum ersten Ausführungsbeispiel besteht darin, dass die Reihenschaltung der zusätzlichen Spannungsquelle 22 mit dem Strommesswiderstand 23 und dem weiteren Schalter 24 nicht mehr den Schalter 20 überbrückt, sondern zwischen den negativen Versorgungsspannungsanschluss 11 und den positiven Verbraucheranschluss 12 geschaltet ist. Die Wirkungsweise bleibt dieselbe.

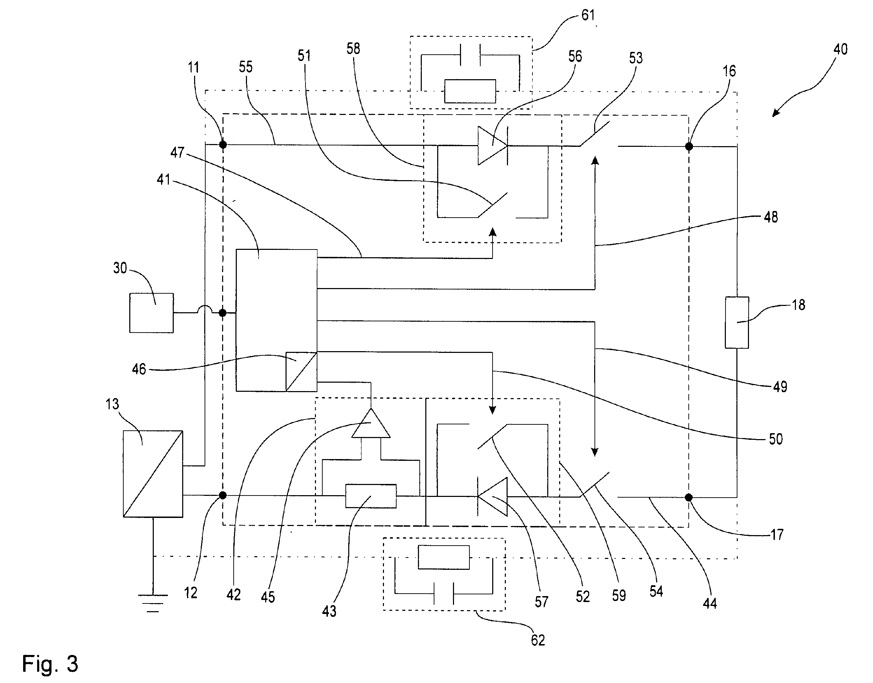

Das in der Figur 3 dargestellte dritte Ausführungsbeispiel ist funktional gegen die in den Figuren 1 und 2 dargestellten Ausführungsbeispiele austauschbar und weist ebenfalls zwei Versorgungsspannungsanschlüsse 11, 12 zur Verbindung mit einer Spannungsquelle 13 und zwei Verbraucheranschlüsse 16, 17 zur Verbindung mit einem Verbraucher 18 auf. Einige weitere Bestandteile der in Figur 3 dargestellten Schaltungsanordnung 40 weisen einen ähnlichen oder identischen Aufbau wie in den Ausführungsbeispielen gemäß den Figuren 1 und 2 auf, werden jedoch aus Gründen der Verständlichkeit mit abweichenden Bezugszeichen versehen. Die Schaltungsanordnung 40 umfasst eine Steuereinrichtung 41, an der eine Stromerfassungsvorrichtung 42 angeschlossen ist.

Die Stromerfassungsvorrichtung 42 umfasst einen, vorzugsweise Messwiderstand 43, der in den zwischen den Versorgungsanschluss 12 und den Verbraucheranschluss 17 ausgebildeten Strompfad 44 eingeschleift ist. Dem Messwiderstand 43 ist ein Messverstärker 45 zugeordnet, der zur Ermittlung eines Spannungsabfalls über dem Messwiderstand 43 ausgebildet ist und der ebenfalls der Stromerfassungsvorrichtung 42 zugehörig ist. Anhand des vom Messverstärker 45 ermittelten Spannungsabfalls kann auf den Strom durch den vorzugsweise niederohmig und somit verlustarm ausgebildeten Messwiderstand 43 rückgeschlossen werden. Der Messverstärker 45 ist mit einem exemplarisch in der Steuereinrichtung 41 angeordneten Analog-Digital-Wandler 46 gekoppelt, der eine Digitalisierung des vom Messverstärker 45 zur Verfügung gestellten Analogsignals des ermittelten Spannungswerts vornimmt. Das digitalisierte Messignal wird in der Steuereinrichtung 41 in nachstehend näher beschriebener Weise weiterverarbeitet.

Die Steuereinrichtung 41 ist über Steuerleitungen 47 bis 50 mit Schaltmitteln 51 bis 54 verbunden, die exemplarisch paarweise in die Strompfade 44 und 55 eingeschleift sind. Die Schaltmittel 51 bis 54 können beispielsweise als Relais oder als elektronische (Halbleiter-)Schalter ausgebildet sein und durch Bereitstellung entsprechender Schaltsignale von der Steuereinrichtung 41 über die Steuerleitungen 47 bis 50 zwischen einer Freigabestellung und einer Sperrstellung umgeschaltet werden. Die Schaltmittel 51 und 52 sind jeweils zur Überbrückung einer im jeweiligen Strompfad 44, 55 in Sperrrichtung eingeschleiften Diode 56, 57 ausgebildet. Die jeweilige Kombination aus Schaltmittel 51 und Diode 56 bzw. Schaltmittel 52 und Diode 57 bilden jeweils ein Spannungsstufenglied 58, 59, das für eine schaltbare und zumindest im Wesentlichen vom Betriebszustand der Schaltungsanordnung 40, insbesondere im Hinblick auf den Stromfluss in der Schaltungsanordnung 40, unabhängige Potentialveränderung im jeweiligen Strompfad 44, 55 ausgebildet ist.

Die Spannungsstufenglieder 58, 59 werden von der Steuereinrichtung 41 vorzugsweise gegensynchron angesteuert, so dass jeweils eine der beiden Dioden 56, 57 durch das zugeordnete Schaltmittel 51 oder 52 elektrisch überbrückt ist. Die Schaltmittel 53, 54 sind, wie auch bei den Ausführungsbeispielen gemäß den Figuren 1 und 2, für eine Abtrennung des Verbrauchers 18 von der Versorgungsspannung an den Versorgungsanschlüssen 11, 12 vorgesehen. In gleicher Weise wie bei den Ausführungsbeispielen gemäß den Figuren 1 und 2 dient die Diagnoseeinrichtung, die insbesondere die Steuereinrichtung 41, die Stromerfassungseinrichtung 42 sowie die Spannungsstufenglieder 58, 59 umfasst, zur Detektion von unerwünschten Querschlüssen 61, 62 in der Schaltungsanordnung 40.

Für eine Detektion von Querschlüssen in der Schaltungsanordnung 40 ist bei der in Figur 3 dargestellten Ausführungsform die folgende Vorgehensweise vorgesehen. Die Last 18 wird über die Schaltungsanordnung 40 mit elektrischer Energie versorgt, die von der Spannungsquelle 13 bereitgestellt wird. Um stets eine konstante Potentialdifferenz zwischen den beiden Verbraucheranschlüssen 16, 17 zu gewährleisten, werden die beiden Spannungsstufenglieder 58, 59 von der Steuereinrichtung 41 jeweils gegensynchron angesteuert. Exemplarisch ist dabei vorgesehen, dass jeweils eines der beiden Schaltmittel 51, 52 in einer Schließstellung ist, in der die jeweils zugeordnete Diode 56, 57 überbrückt wird, während das jeweils andere Schaltmittel 51, 52 in einer Öffnungsstellung ist. Damit findet in jeweils einem der beiden Strompfade 44, 55 ein Stromfluss durch die Diode 56, 57 statt, während im jeweils anderen Strompfad ein Stromfluss an der Diode 56, 57 vorbei durch das geschlossene Schaltmittel 51, 52 stattfindet.

Somit findet in demjenigen Strompfad 44, 55, in dem der Strom durch die Diode 56, 57 fließt, eine Reduktion des elektrischen Potentials um die Verlustspannung am P-N-Übergang der jeweiligen Diode 56, 57 statt, während im jeweils anderen Strompfad 44, 55 aufgrund des geringen elektrischen Widerstands des zugeordneten Schaltmittels 52, 52 keine und nur eine geringfügige und damit unerhebliche Potentialänderung vorliegt.

Somit ergibt sich in einem ersten Betriebszustand der Schaltungsanordnung 40, in dem exemplarisch die Diode 56 aufgrund des geschlossenen Schaltmittels 51 überbrückt wird, während die Diode 57 in ihrer Durchflussrichtung vom Strom durchflossen wird, eine Potentialabsenkung im Strompfad 55 und damit am Verbraucheranschluss 17. Bei einer nicht dargestellten Ausführungsform der Erfindung sind die Dioden in den Strompfaden jeweils in Sperrrichtung angeordnet, so dass anstelle der Verlustspannung am P-N-Übergang jeweils die Zenerspannung der Diode zur Reduzierung des elektrischen Potentials führt.

Nach einer vorzugsweise zeitgleich erfolgten gegensynchronen Ansteuerung der beiden Schaltmittel 51 und 52 ergibt sich in einem zweiten Betriebszustand eine Potentialabsenkung am Verbraucheranschluss 16, da in diesem Betriebszustand die Diode 57 aufgrund des geschlossenen Schaltmittels 52 überbrückt wird, während die Diode 56 gegen ihre Sperrrichtung vom Strom durchflossen wird.

Durch diese Verschiebung des Potentialniveaus an den beiden Verbraucheranschlüssen 16 und 17, die bei beiden Betriebszuständen die gleiche Potentialdifferenz aufweisen, treten unterschiedliche Stromwerte in der Schaltungsanordnung 40 auf, sofern parasitäre Kapazitäten oder andere Querschlüsse 61, 62 vorliegen.

Diese unterschiedlichen Stromwerte können von der Stromerfassungseinrichtung 42 ermittelt und in der Steuereinrichtung 41 verarbeitet werden. Bei dieser Verarbeitung findet vorzugsweise eine Differenzbildung zwischen einem im ersten Betriebszustand ermittelten ersten Stromwert und einem im zweiten Betriebszustand ermittelten zweiten Stromwert statt, wobei die Differenz der beiden Stromwerte als Maß für eventuell vorliegende Querschlüsse herangezogen wird. In Abhängigkeit von einem vorgebbaren Grenzwert kann die Steuereinrichtung 41 ein Alarmsignal ausgeben, sofern die ermittelte Differenz der beiden Stromwerte den Grenzwert übersteigt. Dieses Alarmsignal kann beispielsweise an die Steuereinrichtung 30 weitergeleitet werden, damit diese über ein nicht näher dargestelltes Bussystem eine Kommunikation mit einer nicht dargestellten Maschinensteuerung aufnimmt. Ergänzend oder alternativ kann bei Überschreitung des Grenzwerts eine Abtrennung des Verbrauchers 18 von der elektrischen Versorgung an den Verbraucheranschlüssen 16, 17 durch eine von der Steuereinrichtung 41 bewirkte Öffnung der beiden Schaltmittel 53, 54 vorgesehen sein.

Zusätzlich zu der Detektion von Querschlüssen 61, 62 kann die Schaltungsanordnung 40 auch in einer Weise betrieben werden, in der die Funktion der beiden Schalter 53 und 54 überprüft wird. Dazu wird jeweils einer der beiden Schalter 53 oder 54 für eine kurze Zeit, insbesondere im Millisekundenbereich, geöffnet, um dann anhand des hierbei einstellenden Stromflusses über die Stromerfassungseinrichtung 42 zu prüfen, ob trotz der zumindest theoretisch unterbrochenen Verbindung zum Verbraucher 18 ein Strom fließt. Sofern dies der Fall ist, kann zumindest der Schluss gezogen werden, dass eventuell der geöffnete Schalter 53 oder 54 eine Fehlfunktion aufweist und möglicherweise nicht vollständig öffnet.

Die in den Ausführungsbeispielen beschriebene Vorrichtung 10, 40 ist zweckmäßigerweise als kompaktes elektrisches Gerät ausgebildet, das zwischen die Versorgungsspannungsanschlüsse 11, 12 und die Verbraucheranschlüsse 16, 17 bzw. zwischen die Spannungsquelle 13 und den wenigstens einen Verbraucher 18 geschaltet wird. Dieses Gerät kann in einem kleinen kompakten Gehäuse untergebracht sein.

## Patentansprüche

1. Vorrichtung zur elektrischen Stromkreisüberwachung eines wenigstens einen elektrischen Verbraucher (18) enthaltenden Verbraucherstromkreises, wobei zwei Versorgungsspannungsanschlüsse (11, 12) über je einen Schalter (19, 20) aufweisende Strompfade (14, 15) mit zwei Verbraucheranschlüssen (16, 17) verbunden sind, an denen der wenigstens eine Verbraucher (18) angeschlossen oder anschließbar ist, mit Steuermitteln (21) zum Öffnen der beiden Schalter (19, 20) in den Strompfaden (14, 15) **dadurch gekennzeichnet, dass** eine zusätzliche Spannungsquelle (22), deren Potential mittels eines weiteren Schalters (24) an einem der Verbraucheranschlüsse (16, 17) anlegbar ist, vorgesehen ist, wobei die Steuermittel (21) auch zum Schließen des weiteren Schalters (24) während Prüfintervallen vorgesehen sind, und weiterhin mit Signalmitteln zur Erzeugung von Fehlersignalen bei Erkennung eines oberhalb eines vorgegebenen oder vorgebbaren Stromflusses liegenden Stroms durch den weiteren Schalter (24).

2. Vorrichtung nach Anspruch 1, **dadurch gekennzeichnet, dass** die Steuermittel (21) und/oder Signalmittel wenigstens einen Mikrocontroller aufweisen oder als ein solcher ausgebildet sind.

3. Vorrichtung nach Anspruch 1 oder 2, **dadurch gekennzeichnet, dass** Stromerfassungsmittel (25) im Stromkreis des weiteren Schalters (24) angeordnet sind, die mit einer Auswerteeinrichtung verbunden sind.

4. Vorrichtung nach Anspruch 3, **dadurch gekennzeichnet, dass** die Stromerfassungsmittel (25) einen Strommesswiderstand (23) im Stromkreis des weiteren Schalters (24) aufweisen.

5. Vorrichtung nach einem der vorhergehenden Ansprüche, **dadurch gekennzeichnet, dass** die Auswerteeinrichtung mit den Steuermitteln (21) und/oder den Signalmitteln verbunden oder in diesen integriert ist und/oder die beiden Verbraucheranschlüsse (16, 17) über einen Kondensator (33) miteinander verbunden sind und/oder die Prüfintervalle eine den Betrieb des Verbrauchers (18) nicht oder nur unwesentlich beeinträchtigende kurze Zeitdauer aufweisen und/oder dass die Steuermittel (21) und/oder Signalmittel mit einer externen Überwachungs- oder Steuereinrichtung (30) über ein Bussystem (29) oder drahtlos verbunden sind und/oder die Steuermittel (21) Abschaltmittel zum Öffnen der beiden Schalter (19, 20) in den Strompfaden (14, 15) bei einer Fehlererkennung oder Grenzwertüberschreitung besitzt und/oder die Vorrichtung als zwischen die Versorgungsspannung (13) und den wenigstens einen Verbraucher (18) geschaltetes elektrisches Gerät ausgebildet ist.

6. Schaltungsanordnung zur Versorgung eines Verbrauchers (18) mit elektrischer Energie, mit wenigstens zwei Strompfaden (14, 15; 44, 55), die sich jeweils zwischen einem zugeordneten Versorgungsanschluss (11, 12) zur Einspeisung von elektrischer Energie in die Schaltungsanordnung (10; 40) und einem Verbraucheranschluss (16, 17) zur Bereitstellung elektrischer Energie an einen Verbraucher (18) erstrecken, wobei den Strompfaden (14, 15; 44, 55) eine Diagnoseeinrichtung (21, 22, 25; 41, 42, 58, 59) zugeordnet ist, die für die Ermittlung und Verarbeitung wenigstens eines elektrischen Kennwerts ausgebildet sind, um Fehlfunktionen der Schaltungsanordnung (10; 40) zu ermitteln, **dadurch gekennzeichnet, dass** die Diagnoseeinrichtung (21, 22, 25; 41, 42, 58, 59) Einstellmittel (19, 20, 22, 24; 58, 59) umfasst, die für eine variable Einstellung von Potentialniveaus an den zugeordneten Verbraucheranschlüssen (16, 17) und für eine Bereitstellung einer vorgebbaren Potentialdifferenz zwischen den Verbraucheranschlüssen (16, 17) ausgebildet sind.

7. Schaltungsanordnung nach Anspruch 6, **dadurch gekennzeichnet, dass** die Einstellmittel (19, 20, 22, 24, 33; 58, 59) für eine alternative Einstellung von zwei, insbesondere genau zwei, unterschiedlichen Potentialniveaus an dem jeweils zugeordneten Verbraucheranschluss (16, 17) ausgebildet sind und/oder dass die Einstellmittel (19, 20, 22, 24, 33; 58, 59) derart ausgebildet sind, dass an den Verbraucheranschlüssen (16, 17) eine Bereitstellung einer von den variablen Potentialniveaus unabhängigen, insbesondere konstanten, Potentialdifferenz zwischen den Verbraucheranschlüssen (16, 17) erfolgt und/oder die Diagnoseeinrichtung (21, 22, 25; 41, 42, 58, 59) derart ausgebildet ist, dass während eines Prüfintervalls, in dem eine Überprüfung der Schaltungseinrichtung (10; 40) vorgenommen wird, eine unterbrechungsfreie und/oder spannungskonstante Versorgung des Verbrauchers (18) mit elektrischer Energie gewährleistet ist und/oder dass die Diagnoseeinrichtung (21, 22, 25; 41, 42, 58, 59) Abschaltmittel (19, 20; 53, 54) zum Öffnen der beiden Strompfade (14, 15; 44, 55) bei einer Fehlererkennung oder Grenzwertüberschreitung umfasst.

8. Schaltungsanordnung nach einem der Ansprüche 6 oder 7, **dadurch gekennzeichnet, dass** in wenigstens einem Strompfad (14, 15; 44, 55), der sich zwischen einem Versorgungsanschluss (11, 12) und einem Verbraucheranschluss (16, 17) erstreckt, als Einstellmittel ein von der Diagnoseeinrichtung (21, 22, 25; 41, 42, 58, 59) schaltbares Spannungsstufenglied (22, 24; 58, 59) eingeschleift ist, das für eine definierte Potentialverschiebung an den Verbraucheranschlüssen (16, 17) bei einem vorgebbaren Betriebszustand der Schaltungsanordnung (10; 40) ausgebildet ist.

9. Schaltungsanordnung nach Anspruch 8, **dadurch gekennzeichnet, dass** das Spannungsstufenglied (22, 24; 58, 59) als Parallelschaltung einer Diode (56, 57) und eines von der Diagnoseeinrichtung (41, 42, 58, 59) ansteuerbaren Schaltmittels (53, 54) ausgebildet ist und/oder dass die Diagnoseeinrichtung (41, 42, 58, 59) für die Durchführung eines Prüfintervalls für eine wechselweise Aktivierung der Schaltmittel (51, 52) in den mit Spannungsstufenglied (58, 59) ausgerüsteten Strompfaden(44, 55) ausgebildet ist, um an den Verbraucheranschlüssen (16, 17) vorgebbare Potentialniveaus bei konstanter Potentialdifferenz zwischen den Verbraucheranschlüssen (16, 17) bereitzustellen.

10. Schaltungsanordnung nach einem der Ansprüche 6 bis 9, **dadurch gekennzeichnet, dass** die Diagnoseeinrichtung (41, 42, 58, 59) für eine Differenzbildung zwischen sich bei wechselweiser Aktivierung der Schaltmittel (51, 52) einstellenden elektrischen Kennwerten ausgebildet ist, um eine Beurteilung eines Funktionszustands der Schaltungsanordnung (40) zu ermöglichen.

11. Schaltungsanordnung nach Anspruch 6, **dadurch gekennzeichnet, dass** in zwei Strompfaden (14, 15) jeweils ein Schalter (19, 20) angeordnet ist, dass eine zusätzliche Spannungsquelle (22) vorgesehen ist, deren Potential mittels eines weiteren Schalters (24) an einem der Verbraucheranschlüsse (16, 17) anlegbar ist, dass die Diagnoseeinrichtung (21, 22, 25) zum Öffnen der beiden Schalter (19, 20) in den Strompfaden (14, 15) und Schließen des weiteren Schalters (24) während Prüfintervallen ausgebildet ist, und dass die Diagnoseeinrichtung (21, 22, 25) Signalmittel zur Erzeugung von Fehlersignalen bei Erkennung eines oberhalb eines vorgegebenen oder vorgebbaren Stromflusses liegenden Stroms durch den weiteren Schalter (24) umfasst.

12. Schaltungsanordnung nach Anspruch 10, **dadurch gekennzeichnet, dass** Stromerfassungsmittel (25) im Stromkreis des weiteren Schalters (24) angeordnet sind, die mit der Diagnoseeinrichtung (21, 22, 25) verbunden sind.

13. Schaltungsanordnung nach Anspruch 11, **dadurch gekennzeichnet, dass** die Stromerfassungsmittel (25) einen Strommesswiderstand (23) im Stromkreis des weiteren Schalters (24) aufweisen und/oder dass die beiden Verbraucheranschlüsse (16, 17) über einen Kondensator (33) miteinander verbunden sind.

14. Schaltungsanordnung nach einem der Ansprüche 6 bis 8, **dadurch gekennzeichnet, dass** die Diagnoseeinrichtung (21, 22, 25; 41, 42, 58, 59) mit einer externen Überwachungs- oder Steuereinrichtung (30) über ein Bussystem (29) oder drahtlos verbunden ist.

15. Verfahren zum Betreiben einer Schaltungsanordnung (10; 40) zur Versorgung eines Verbrauchers (18) mit elektrischer Energie, wobei die Schaltungsanordnung (10; 40) eine Diagnoseeinrichtung (21, 22, 25; 41, 42, 58, 59) zur Ermittlung eines Funktionszustands der Schaltungsanordnung (10; 40) umfasst, mit den Schritten: Bereitstellen einer vorgebbaren elektrischen Potentialdifferenz an Verbraucheranschlüssen (16, 17) der Schaltungsanordnung (10; 40), die einem Verbraucher (18) zugeordnet sind, Ermitteln eines ersten Betrags eines elektrischen Kennwerts der Schaltungsanordnung (10; 40) mittels der Diagnoseeinrichtung (21, 22, 25; 41, 42, 58, 59), **gekennzeichnet durch** den Schritten:
synchrone Verschiebung der elektrischen Potentiale an den Verbraucheranschlüssen (16, 17) bei Aufrechterhaltung der Potentialdifferenz derart, dass eine unterbrechungsfreie und konstante Versorgung des Verbrauchers (18) gewährleistet ist, Ermitteln eines zweiten Betrags des elektrischen Kennwerts der Schaltungsanordnung (10; 40) und Berechnen einer Differenz zwischen dem ersten und dem zweiten Betrag als Indikator für eine Fehlfunktion mittels der Diagnoseeinrichtung (21, 22, 25; 41, 42, 58, 59), Vergleichen der berechneten Differenz mit einem vorgebbaren Schwellwert, Bereitstellen einer Fehlermeldung bei Überschreiten des vorgebbaren Schwellwerts durch die errechnete Differenz.

## Claims

1. Device for the electrical circuit monitoring of a load circuit containing at least one electrical load (18), wherein two supply voltage connections (11, 12) are connected, via current paths (14, 15) each having a switch (19, 20), to two load connections (16, 17) at which the load or loads (18) is or are connected or may be connected, and with control means (21) to open the two switches (19, 20) in the current paths (14, 15), **characterised in that** there is provided an additional voltage source (22) with a position which may be applied by means of an additional switch (24) to one of the load connections (16, 17), wherein the control means (21) are also provided to close the additional switch (24) during testing intervals, and also having signalling means to generate error signals on the detection by the additional switch (24) of a current lying above a preset or presettable current flow.

2. Device according to claim 1, **characterised in that** the control means (21) and/or signalling means have at least one microcontroller or are designed as such.

3. Device according to claim 1 or 2, **characterised in that** current detection means (25) are provided in the circuit of the additional switch (24), and are connected to an evaluation device.

4. Device according to claim 3, **characterised in that** the current detection means (25) have a shunt (23) in the circuit of the additional switch (24).

5. Device according to any of the preceding claims, **characterised in that** the evaluation device is connected to or integrated in the control means (21) and/or the signalling means and/or the two load connections (16, 17) are joined together via a capacitor (33) and/or the testing intervals are of a short duration which does not impair operation of the load (18) or else only to an insignificant extent and/or that the control means (21) and/or signalling means are connected to an external monitoring or control device (30) via a bus system (29) or wirelessly and/or that the control means (21) have disconnection means to open the two switches (19, 20) in the current paths (14, 15) in the event of fault detection or a limit value overshoot and/or the device is in the form of an electrical device connected between the supply voltage (13) and the load or loads (18).

6. Circuit configuration for supplying a load (18) with electrical power, with at least two current paths (14, 15; 44, 45), each extending between an assigned supply connection (11, 12) for providing electrical power to the circuit configuration (10; 40) and a load connection (16, 17) for providing electrical power to a load (18), wherein the current paths (14, 15; 44, 45) are assigned a diagnostic device (21, 22, 25; 41, 42, 58, 59) designed for the determination and processing of at least one electrical characteristic value, in order to determine malfunctions of the circuit configuration (10; 40), **characterised in that** the diagnostic device (21, 22, 25; 41, 42, 58, 59) includes setting means (19, 20, 22, 24; 58, 59) which are designed for variable setting of potential levels at the assigned load connections (16, 17) and for provision of a presettable potential difference between the load connections (16, 17).

7. Circuit configuration according to claim 6, **characterised in that** the setting means (19, 20, 22, 24, 33; 58, 59) are designed for an alternative setting of two, in particular exactly two, potential levels at the respective assigned load connection (16, 17), and/or that the setting means (19, 20, 22, 24, 33; 58, 59) are so designed that, at the load connections (16, 17), provision of a potential difference between the load connections (16, 17) which is independent of the variable potential levels, in particular constant, is effected, and/or that the diagnostic device (21, 22, 25; 41, 42, 58, 59) is so designed that during a testing interval in which a check test of the circuit configuration (10; 40) is made, an interruption-free and/or constant voltage supply of electrical power to the load (18) is ensured and/or that the diagnostic device (21, 22, 25; 41, 42, 58, 59) includes disconnection means (19, 20; 53, 54) for opening the two current paths (14, 15; 44, 55) in the event of a fault detection or a limit value overshoot.

8. Circuit configuration according to one of claims 6 or 7 **characterised in that**, a voltage step element (22, 24; 58, 59) switchable by the diagnostic device (21, 22, 25; 41, 42, 58, 59) and designed for a defined potential shift at the load connections (16, 17) during a presettable operating state of the circuit configuration (10; 40) is looped into at least one current path (14, 15; 44, 55) as setting means, the at least one current path (14, 15; 44, 55) extending between one supply connection (11, 12) and one load connection (16, 17).

9. Circuit configuration according to claim 8, **characterised in that** the voltage step element (22, 24; 58, 59) is in the form of a parallel connection of a diode (56, 57) and switching means (53, 54) which may be controlled by the diagnostic device (41, 42, 58, 59) and/or that the diagnostic device (41, 42, 58, 59) is designed for the implementation of a testing interval for alternate activation of the switching means (53, 54) in the current paths (44, 55) equipped with the voltage step element (58, 59), in order to provide at the load connections (16, 17) presettable potential levels with constant potential difference between the load connections (16, 17).

10. Circuit configuration according to any of claims 6 to 9, **characterised in that** the diagnostic device (41, 42, 58, 59) is designed for difference forming between electrical characteristic values occurring during alternate activation of the switching means (51, 52), in order to facilitate evaluation of a function state of the circuit configuration (40).

11. Circuit configuration according to claim 6, **characterised in that** a switch (19, 20) is provided in each of two current paths (14, 15), that an additional voltage source (22) is provided with potential which may be applied to one of the load connections (16, 17) by means of an additional switch (24), that the diagnostic device (21, 22, 25) is designed to open the two switches (19, 20) in the current paths (14, 15) and to close the additional switch (24) during testing intervals, and that the diagnostic device (21, 22, 25) includes signalling means to generate error signals on detection by the additional switch (24) of a current lying above a preset or presettable current flow.

12. Circuit configuration according to claim 10, **characterised in that** current detection means (25) are provided in the circuit of the additional switch (24) and are connected to the diagnostic device (21, 22, 25).

13. Circuit configuration according to claim 11, **characterised in that** the current detection means (25) have a shunt (23) in the circuit of the additional switch (24) and/or that the two load connections (16, 17) are connected to one another via a capacitor (33).

14. Circuit configuration according to any of claims 6 to 8, **characterised in that** the diagnostic device (21, 22, 25; 41, 42, 58, 59) is connected, via a bus system (29) or wirelessly, to an external monitoring or control device (30).

15. Method of operating a circuit configuration (10; 40) to supply a load (18) with electrical power, wherein the circuit configuration (10; 40) includes a diagnostic device (21, 22, 25; 41, 42, 58, 59) for determining a function state of the circuit configuration (10; 40), with the steps: provision of a presettable electrical potential difference at load connections (16, 17) of the circuit configuration (10; 40). which are assigned to a load (18), determination of a first amount of an electrical characteristic value of the circuit configuration (10; 40) by means of the diagnostic device (21, 22, 25; 41, 42, 58, 59), **characterised by** the steps: synchronous shifting of the electrical potential at the load connections (16, 17) with maintenance of the potential difference in such a way that an interruption-free and constant supply to the load (18) is ensured, determination of a second amount of the electrical characteristic value of the circuit configuration (10; 40) and calculation by the diagnostic device (21, 22, 25; 41, 42, 58, 59) of a difference between the first and second amount as indicator of a malfunction, comparison of the calculated difference with a presettable threshold value, provision of an error message on overshoot of the presettable threshold value by the calculated difference.

## Revendications

1. Dispositif de surveillance d'un circuit électrique d'un circuit électrique récepteur contenant au moins un récepteur (18) électrique, sachant que deux bornes de tension d'alimentation (11, 12) sont raccordées, par l'intermédiaire de voies de courant (14, 15) présentant respectivement un commutateur (19,20), à deux bornes de récepteur (16, 17), auxquelles au moins un récepteur (18) est connecté ou peut être connecté, comprenant des moyens de commande (21) pour ouvrir les deux commutateurs (19, 20) dans les voies de courant (14, 15), **caractérisé en ce qu'**est prévue une source de tension (22) supplémentaire, dont le potentiel peut être appliqué au niveau d'une des bornes de récepteur (16, 17) au moyen d'un autre commutateur (24), sachant que les moyens de commande (21) sont prévus également afin de fermer l'autre commutateur (24) au cours de périodes de contrôle, et comprenant en outre des moyens de signal servant à produire des signaux d'anomalie en cas d'identification d'un courant supérieur à un flux de courant prédéfini ou pouvant être prédéfini circulant à travers l'autre commutateur (24).

2. Dispositif selon la revendication 1, **caractérisé en ce que** les moyens de commande (21) et/ou les moyens de signal présentent au moins un microcontrôleur ou sont réalisés sous la forme d'un microcontrôleur de ce type.

3. Dispositif selon la revendication 1 ou 2, **caractérisé en ce que** des moyens de détection du courant (25) sont disposés dans le circuit électrique de l'autre commutateur (24), lesdits moyens de détection du courant étant raccordés à un système d'analyse.

4. Dispositif selon la revendication 3, **caractérisé en ce que** les moyens de détection de courant (25) présentent une résistance de mesure du courant (23) dans le circuit électrique de l'autre commutateur (24).

5. Dispositif selon l'une quelconque des revendications précédentes, **caractérisé en ce que** le système d'analyse est raccordé aux moyens de commande (21) et/ou aux moyens de signal ou est intégré dans ces derniers, et/ou **en ce que** les deux bornes de récepteur (16, 17) sont raccordées l'une à l'autre par l'intermédiaire d'un condensateur (33), et/ou **en ce que** les périodes de contrôle présentent une courte durée ne portant pas préjudice ou, le cas échéant de manière négligeable, au fonctionnement du récepteur (18), et/ou **en ce que** les moyens de commande (21) et/ou les moyens de signal sont raccordés, par l'intermédiaire d'un système de bus (29) ou sans fil, à un système de surveillance ou de commande (30), et/ou **en ce que** les moyens de commande (21) comportent des moyens de mise hors service servant à ouvrir les deux commutateurs (19, 20) dans les voies de courant (14, 15) en cas d'identification d'une anomalie ou d'un dépassement de valeur limite, et/ou **en ce que** le dispositif est réalisé sous la forme d'un appareil électrique commuté entre la tension d'alimentation (13) et le récepteur (18) au moins au nombre de un.

6. Ensemble formant circuit servant à alimenter un récepteur (18) en énergie électrique, comprenant au moins deux voies de courant (14, 15 ; 44, 55), qui s'étendent respectivement entre une borne d'alimentation (11, 12) associée pour injecter de l'énergie électrique dans l'ensemble formant circuit (10 ; 40) et une borne de récepteur (16, 17) pour la fourniture de l'énergie électrique à un récepteur (18), sachant qu'un système de diagnostic (21, 22, 25 ; 41, 42, 58, 59) est associé à des voies de courant (14, 15 ; 44, 55), lesquelles sont réalisées pour déterminer et traiter au moins une valeur caractéristique électrique afin de déterminer des dysfonctionnements de l'ensemble formant circuit (10 ; 40), **caractérisé en ce que** le système de diagnostic (21, 22, 25 ; 41, 42, 58, 59) comprend des moyens de réglage (19, 20, 22, 24 ; 58, 59), qui sont réalisés pour régler de manière variable des niveaux de potentiel au niveau des bornes de récepteur (16, 17) associées et pour fournir une différence de potentiel pouvant être prédéfinie entre les bornes de récepteur (16, 17).

7. Ensemble formant circuit selon la revendication 6, **caractérisé en ce que** les moyens de réglage (19, 20, 22, 24, 33 ; 58, 59) sont réalisés pour un réglage alternatif de deux, en particulier précisément de deux, niveaux de potentiel différents au niveau de la borne de récepteur (16, 17) respectivement associée, et/ou **en ce que** les moyens de réglage (19, 20, 22, 24, 33 ; 58, 59) sont réalisés de telle manière qu'une différence de potentiel entre les bornes de récepteur (16, 17), qui dépend des niveaux de potentiel variables, qui est en particulier constante, est fournie au niveau des bornes de récepteur (16, 17) et/ou que le système de diagnostic (21, 22, 25 ; 41, 42, 58, 59) est réalisé de telle manière qu'une alimentation du récepteur (18) sans interruption et/ou constante en matière de tension est assurée avec une énergie électrique lors d'une période de contrôle, au cours de laquelle une vérification du circuit (10 ; 40) est effectuée, et/ou **en ce que** le système de diagnostic (21, 22, 25 ; 41, 42, 58, 59) comprend des moyens de mise hors service (19, 20 ; 53, 54) servant à ouvrir les deux voies de courant (14, 15 ; 44, 55) en cas d'identification d'une anomalie ou en cas de dépassement d'une valeur limite.

8. Ensemble formant circuit selon l'une quelconque des revendications 6 ou 7, **caractérisé en ce qu'**un organe à étages de tension (22, 24 ; 58, 59) pouvant être commuté par le système de diagnostic (21, 22, 25 ; 41, 42, 58, 59) est bouclé, en tant que moyen de réglage, dans au moins une voie de courant (14, 15 ; 44, 55), laquelle s'étend entre une borne d'alimentation (11, 12) et une borne de récepteur (16, 17), ledit organe à étages de tension étant réalisé, pour un décalage de potentiel défini au niveau des bornes de récepteur (16, 17) lors d'un état de fonctionnement pouvant être prédéfini de l'ensemble formant circuit (10 ; 40).

9. Ensemble formant circuit selon la revendication 8, **caractérisé en ce que** l'organe à étages de tension (22, 24 ; 58, 59) est réalisé sous la forme d'un circuit en parallèle d'une diode (56, 57) et d'un moyen de commutation (53, 54) pouvant être commandé par le système de diagnostic (41, 42, 58, 59), et/ou **en ce que** le système de diagnostic (41, 42, 58, 59) est réalisé pour la mise en oeuvre d'une période de contrôle pour une activation alternée des moyens de commutation (51, 52) dans les voies de courant (44, 55) équipées de l'organe à étages de tension (58, 59) afin de fournir, au niveau des bornes de récepteur (16, 17), des niveaux de potentiel pouvant être prédéfinis en présence d'une différence de potentiel constante entre les bornes de récepteur (16, 17).

10. Ensemble formant circuit selon l'une quelconque des revendications 6 à 9, **caractérisé en ce que** le système de diagnostic (41, 42, 58, 59) est réalisé pour former une différence entre des valeurs caractéristiques électriques se réglant lors de l'activation alternée des moyens de commutation (51, 52) afin de permettre une évaluation d'un état de fonctionnement de l'ensemble formant circuit (40).

11. Ensemble formant circuit selon la revendication 6, **caractérisé en ce que** respectivement un commutateur (19, 20) est disposé dans deux voies de courant (14, 15), **en ce qu'**est prévue une source de tension (22) supplémentaire, dont le potentiel peut être appliqué, au moyen d'un autre commutateur (24), au niveau d'une des bornes de récepteur (16, 17), **en ce que** le système de diagnostic (21, 22, 25) est réalisé pour ouvrir les deux commutateurs (19, 20) dans les voies de courant (14, 15) et pour fermer l'autre commutateur (24) au cours des périodes de contrôle, et **en ce que** le système de diagnostic (21, 22, 25) comprend des moyens de signal servant à produire des signaux d'anomalie en cas d'identification d'un courant supérieur à un flux de courant prédéfini ou pouvant être prédéfini, circulant à travers l'autre commutateur (24).

12. Ensemble formant circuit selon la revendication 10, **caractérisé en ce que** des moyens de détection de courant (25) sont disposés dans le circuit électrique de l'autre commutateur (24), lesquels sont raccordés au système de diagnostic (21, 22, 25).

13. Ensemble formant circuit selon la revendication 11, **caractérisé en ce que** les moyens de détection de courant (25) présentent une résistance de mesure de courant (23) dans le circuit électrique de l'autre commutateur (24), et/ou **en ce que** les deux bornes de récepteur (16, 17) sont raccordées entre elles par l'intermédiaire d'un condensateur (33).

14. Ensemble formant circuit selon l'une quelconque des revendications 6 à 8, **caractérisé en ce que** le système de diagnostic (21, 22, 25 ; 41, 42, 58, 59) est raccordé, par l'intermédiaire d'un système de bus (29) ou sans fil, à un système externe de surveillance ou de commande (30).

15. Procédé servant à faire fonctionner un ensemble formant circuit (10 ; 40) pour l'alimentation d'un récepteur (18) en énergie électrique, sachant que l'ensemble formant circuit (10 ; 40) comprend un système de diagnostic (21, 22, 25 ; 41, 42, 58, 59) servant à déterminer un état de fonctionnement de l'ensemble formant circuit (10 ; 40), lequel procédé comprend les étapes qui suivent consistant à : fournir une différence de potentiel électrique pouvant être prédéfinie au niveau de bornes de récepteur (16, 17) de l'ensemble formant circuit (10; 40), qui sont associées à un récepteur (18); déterminer une première valeur d'une valeur caractéristique électrique de l'ensemble formant circuit (10 ; 40) au moyen du système de diagnostic (21, 22, 25 ; 41, 42, 58, 59), **caractérisé par** les étapes qui suivent consistant à : décaler de manière synchrone les potentiels électriques au niveau des bornes de récepteur (16, 17) lors du maintien de la différence de potentiel de manière à assurer une alimentation constante et sans interruption du récepteur (18), déterminer une deuxième valeur de la valeur caractéristique électrique de l'ensemble formant circuit (10; 40) et calculer une différence entre la première valeur et la deuxième valeur en tant qu'indicateur d'un dysfonctionnement au moyen du système de diagnostic (21, 22, 25 ; 41, 42, 58, 59), comparer la différence calculée avec une valeur seuil pouvant être prédéfinie, fournir une notification d'anomalie en cas de dépassement de la valeur seuil pouvant être prédéfinie grâce à la différence obtenue par calcul.
